Europäisches Patentamt

European Patent Office

Office européen des brevets

(11) Veröffentlichungsnummer: **0 517 156 A1**

## EUROPÄISCHE PATENTANMELDUNG

(21) Anmeldenummer: **92109276.3**

(22) Anmeldetag: **02.06.92**

(51) Int. Cl.5: **B23B 27/16**

(30) Priorität: **03.06.91 CH 1636/91**

(43) Veröffentlichungstag der Anmeldung:
**09.12.92 Patentblatt 92/50**

(84) Benannte Vertragsstaaten:
**CH DE FR IT LI NL**

(71) Anmelder: **DIAMETAL AG**
**Solothurnerstrasse 136**
**CH-2500 Biel 6(CH)**

(72) Erfinder: **Ledermann, Peter**
**Schulhausstrasse 10**
**CH-3293 Dotzigen(CH)**

(74) Vertreter: **Petschner, Goetz**
**Patentanwaltsbüro G. Petschner**
**Wannenstrasse 16**
**CH-8800 Thalwil(CH)**

(54) **Zerspanwerkzeug, insbesondere Automatendrehwerkzeug.**

(57) Das Automatenwerkzeug umfasst einen Stahlschaft (1) und einen Schneidkeil (2). Hierbei ist der Schneidkeil (2) mit dem Stahlschaft (1) lösbar und umsetzbar verschraubt, wobei zwischen Schneidkeil (2) und Stahlschaft (1) Anti-Torsionsmittel (4,5) wirksam sind. Diese sind hier durch eine querverlaufende Nut-Keil-Verbindung zwischen Schneidkeil (2) und Stahlschaft (1) gebildet. Zudem sitzt der Schneidkeil (2) auf einer Schulter (3) des Stahlschaftes (1) mit einem Schnitt-Teil (6) überlappend sowie nach oben und seitlich flächenbündig auf.

Dies ergibt einen bruchsicheren, universell anwendbaren und vielfach nachschleifbaren Drehstahl.

EP 0 517 156 A1

Die vorliegende Erfindung betrifft ein Zerspanwerkzeug, insbesondere Drehwerkzeug für Werkzeugmaschinen, insbesondere Automaten, mit einem, auf einem Stahlschaft abgestützten, aus einer Hartmetallplatte gebildeten Schneidkeil.

Bei sogenannten Drehstählen resp. Drehmeisseln der vorgenannten Art, bei denen nur der Schneidkeil aus dem den Anforderungen entsprechenden Werkzeugbaustoff, wie Hartmetall, Oxidkeramik u. dgl. besteht, erfolgt eine Lötverbindung zwischen Schneidkeil und tragendem Stahlschaft.

Diese Lötverbindung zwischen Hartmetall-Schneidkeil und Stahlschaft hat aber einige erhebliche Nachteile. So besteht beispielsweise ein hohes Bruchrisiko, indem durch die unterschiedlichen Ausdehnungskoeffizienten der beiden Materialien Schubspannungen entstehen. Dieses Bruchrisiko wird noch erhöht, wenn der Stahlschaft unterhalb des Schneidkeils - etwa aus Platzgründen am Automaten - angeschliffen und dadurch der abstützende Teil des Schaftes zusätzlich geschwächt wird, indem dort die Zugspannung in der Hartmetallplatte ansteigt. Ebenso wirkt sich ein Nachschleifen des Werkzeuges, bei welchem das Hartmetall des Schneidkeils und der Stahl des Schaftes im Verbund abgetragen werden, nachteilig aus, indem die Materialien an der Schleifstelle unterschiedlich erhitzen, was die Bruchgefährdung weiter erhöht.

Nachteilig ist ferner, dass für jeden Werkzeugbaustoff und für jede Schneidkeil-Form ein kompletter Drehstahl aus Schneidkeil und Stahlschaft hergestellt werden muss.

Es ist somit Aufgabe der vorliegenden Erfindung, einen Drehstahl der vorgenannten Art zu schaffen, bei welchem die Bruchgefahr im wesentlichen ausgeschlossen und der Drehstahl universeller verwendbar ist.

Dies wird erfindungsgemäss dadurch erreicht, dass der Schneidkeil mit dem Stahlschaft lösbar und umsetzbar verschraubt ist, wobei zwischen Schneidkeil und Stahlschaft Anti-Torsionsmittel wirksam sind.

Hierbei kann eine bevorzugte Ausgestaltung darin bestehen, dass die Anti-Torsionsmittel durch eine längs- und/oder querverlaufende Nut-Keil-Verbindung zwischen Schneidkeil und Stahlschaft gebildet sind.

Ferner ist es vorteilhaft, wenn der Schneidkeil auf einer Schulter des Stahlschaftes mit einem Schnitt-Teil überlappend sowie nach oben und seitlich flächenbündig aufsitzt.

Durch diese Massnahmen wird ein Drehstahl geschaffen, bei dem der Schneidkeil nicht nur bruchsicher abgestützt ist, sondern beliebig ausgewechselt und durch seinen überlappenden Schnitt-Teil sowie durch Umsetzen vielmals nachgeschliffen werden kann.

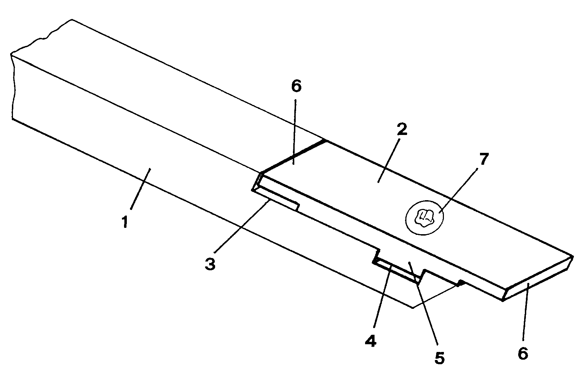

Eine beispielsweise Ausführungsform des Erfindungsgegenstandes ist nachfolgend anhand der Zeichnung, welche ein Automatendrehwerkzeug in schaubildartiger Darstellung zeigt, näher erläutert.

Das dargestellte Automatendrehwerkzeug umfasst einen, auf einem Stahlschaft 1 abgestützten, aus einer Hartmetallplatte oder dgl. gebildeten Schneidkeil 2.

Erfindungsgemäss und erfindungswesentlich ist der Schneidkeil 2 mit dem Stahlschaft 1 lösbar und umsetzbar verschraubt, etwa mittels Inbusschraube 7 zentrisch des Schneidkeils 2.

Hierbei sitzt der Schneidkeil 2 auf einer Schulter 3 des Stahlschaftes 1 mit einem Schnitt-Teil 6 überlappend sowie nach oben und seitlich flächenbündig auf, wie das die Darstellung deutlich macht.

Weiter taucht ein Querkeil 5 untenseitig des Schneidkeils 2 in eine Gegennut 4 an der Schulter 3 ein, um ein Anti-Torsionsmittel zu bilden.

Durch diese Massnahmen wird ein universelles, langlebiges Automatendrehwerkzeug geschaffen, bei dem der Schneidkeil nicht nur bruchsicher abgestützt ist, sondern beliebig ausgewechselt und durch seinen überlappenden Schnitt-Teil sowie durch Umsetzen vielmals nachgeschliffen werden kann.

Natürlich sind hier im Rahmen der Erfindung eine Reihe von Modifikationen gegeben. Abgesehen davon, dass der Schneidkeil aus beliebigem geeigneten Material sein und beliebige Form aufweisen kann sowie weiter beliebig auswechselbar ist, können die Anti-Torsionsmittel auch aus einer längsverlaufenden oder kreuzweisen Nut-Keil-Verbindung bestehen, die zudem rechteckförmigen oder schwalbenschwanzförmigen Querschnitt aufweisen kann. Die Anti-Torsionsmittel sowie die Verschraubung bewirken dabei eine eindeutige Positionierung und Sicherung des Schneidkeils auf dem Stahlschaft.

**Patentansprüche**

1. Zerspanwerkzeug, insbesondere Drehwerkzeug für Werkzeugmaschinen, insbesondere Automaten, mit einem, auf einem Stahlschaft abgestützten, aus einer Hartmetallplatte gebildeten Schneidkeil, dadurch gekennzeichnet, dass der Schneidkeil (2) mit dem Stahlschaft (1) lösbar und umsetzbar verschraubt ist, wobei zwischen Schneidkeil (2) und Stahlschaft (1) Anti-Torsionsmittel (4,5) wirksam sind.

2. Zerspanwerkezug nach Anspruch 1, dadurch gekennzeichnet, dass die Anti-Torsionsmittel (4,5) durch eine längs- und/oder querverlaufende Nut-Keil-Verbindung zwischen Schneidkeil (2) und Stahlschaft (1) gebildet sind.

3. Zerspanwerkzeug nach Anspruch 1 oder 2, dadurch gekennzeichnet, dass der Schneidkeil (2) auf einer Schulter (3) des Stahlschaftes (1) mit einem Schnitt-Teil (6) überlappend sowie nach oben und seitlich flächenbündig aufsitzt.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5 ) |
|---|---|---|---|
| X | GB-A-1 255 494 (LUMB) <br> * Seite 1, Zeile 76 - Seite 2, Zeile 7; Abbildungen 1,2 * <br> --- | 1-3 | B23B27/16 |
| A | EP-A-0 037 691 (GENERAL ELECTRIC) <br> * Abbildung 1 * <br> --- | | |
| A | DE-A-3 446 455 (DIETERLE) <br> * Abbildungen 10,11 * <br> --- | | |
| A | DE-A-1 552 334 (HEINLEIN) <br> * Abbildungen 3,4,11 * <br> --- | | |
| A | DE-A-3 321 184 (HARTMETALL-WERKZEUGFABRIK ...) <br> * Abbildungen 1,2 * <br> --- | | |
| A | DE-A-3 405 211 (KIENINGER) <br> * Abbildung 1 * <br> --- | | |
| A | DE-A-3 600 077 (MITSUBISHI KINZOKU) <br> * Abbildungen 45-47,50,51 * <br> --- | | RECHERCHIERTE SACHGEBIETE (Int. Cl.5 ) |
| A | EP-A-0 300 172 (GTE VALENITE) <br> * Abbildungen 1,2 * <br> ----- | | B23B |

Der vorliegende Recherchenbericht wurde für alle Patentansprüche erstellt

| Recherchenort | Abschlußdatum der Recherche | Prüfer |
|---|---|---|
| DEN HAAG | 14 AUGUST 1992 | BOGAERT. F.L. |